**Europäisches Patentamt**

**European Patent Office**

**Office européen des brevets**

(19)

(11) Veröffentlichungsnummer: **0 027 845**
**B1**

(12) # EUROPÄISCHE PATENTSCHRIFT

(45) Veröffentlichungstag der Patentschrift:
**12.12.84**

(51) Int. Cl.³: **B 64 G 1/48**, F 28 D 15/00

(21) Anmeldenummer: **80103142.8**

(22) Anmeldetag: **06.06.80**

(54) **Wärmerohrprofil.**

(30) Priorität: **26.10.79 DE 2943253**

(43) Veröffentlichungstag der Anmeldung:
**06.05.81 Patentblatt 81/18**

(45) Bekanntmachung des Hinweises auf die Patenterteilung:
**12.12.84 Patentblatt 84/50**

(84) Benannte Vertragsstaaten:
**BE CH FR GB IT LI NL**

(56) Entgegenhaltungen:
**FR - A - 2 193 960**
**US - A - 3 532 158**
**US - A - 3 548 930**
**US - A - 3 613 778**
**US - A - 3 749 156**

(73) Patentinhaber: **ERNO Raumfahrttechnik Gesellschaft mit beschränkter Haftung, Hünefeldstrasse 1-5, D-2800 Bremen (DE)**

(72) Erfinder: **Schlitt, Reinhard, Dr., Strassburger Strasse 26, D-2800 Bremen 1 (DE)**

**Beschreibung**

Die Erfindung bezieht sich auf ein Wärmerohrprofil zur Integration in eine Honigwaben-Sandwich-Platte mit parallel zur Sandwich-Platten-Ebene verlaufender Wärmrohrprofil-Achse, wobei das Wärmerohrprofil eine rechteckige Außenkontur aufweist, bzw. auf ein Wärmerohr mit einer in axialer Richtung verlaufende Rillen aufweisenden Innenrohrwandung.

Wärmerohre oder »heat pipes« zum Transport von Wärmeleistung sind insbesondere im Zusammenhang mit dem Satellitenbau bekanntgeworden. Die Aufgabe dieser Wärmerohre ist es normalerweise, unerwünschte aber gleichzeitig unvermeidbare Wärmeleistung vom Ort ihrer Entstehung abzuführen und an anderer Stelle gegebenenfalls zu vernichten. Die Wirkungsweise dieser Wärmerohre beruht darauf, daß in einer Reizzone, die in unmittelbarer Verbindung mit einer Wärmequelle steht, eine in dem Wärmerohr enthaltene Flüssigkeit verdampft wird, so daß die Verdampfungswärme mit dem Dampf vom Ort der Entstehung in dem Wärmerohr abgeführt wird. Kondensiert dieser Dampf in einer anderen Zone dieses Rohres, so wird die Latentwärme an dieser Stelle an die Rohrwandung abgegeben, von wo sie gegebenenfalls, beispielsweise in Form von Wärmestrahlung, abgeführt werden kann. Gleichzeitig wird in diesen Wärmerohren die durch die Kondensation entstehende Flüssigkeit durch Kapillarkräfte wieder in den Bereich der Heizzone zurückgeführt. Aus diesem Grunde ist die Innenwand dieser Heizrohre mit derartigen Kapillaren versehen.

Im Prinzip wirken also diese Wärmerohre wie eine normale Kühleinrichtung, allerdings ohne daß in dem Kühlkreislauf eine zusätzliche Kraftquelle erforderlich wäre. Letzenendes hängt die Wirksamkeit eines solchen Wärmerohres von der geeigneten Ausbildung der Kapillarstruktur an der Innenwand des Wärmerohres ab. Dementsprechend ist es aber möglich, ein solches Wärmerohr in ziemlich weiten Grenzen dem jeweiligen Transportproblem anzupassen und es durch geeignete Wahl seines Durchmessers und der Kapillargröße zu optimieren. Gleichzeitig ist damit allerdings auch im allgemeinen der Außendurchmesser eines solchen Wärmerohres vorgegeben.

Wegen der einfachen Wirkungsweise dieser Wärmerohre ist ihre Verwendung im Satellitenbau, bei dem es bekanntlich vor allen Dingen auf Gewichtseinsparungen ankommt, vorangetrieben worden. Sie dienen gerade im Satellitenbau dazu, die beim Betrieb von Instrumenten entstehende Abwärme vom Ort ihrer Entstehung, d. h. also von den als Wärmequelle wirkenden Instrumenten, abzuführen und vorzugsweise auf Flächen zu übertragen, die diese unerwünschte Wärmeleistung in Form von Wärmestrahlung abgeben können.

Es liegt daher nahe, diese Wärmerohre als integrierte Bestandteile in die üblicherweise verwendeten Strukturen, und das sind in vielen Fällen Sandwichplatten, einzubauen. Aus Festigkeitsgründen weisen jedoch diese Sandwichplatten besonders dann, wenn sie gleichzeitig als Träger der Instrumente dienen, bestimmte Mindestdicken auf. Diese Mindestdicken sind aber im allgemeinen größer als die optimalen Durchmesser der Wärmerohre.

Eine Anordnung der eingangs angegebenen Gattung ist bereits nach der US-A-3 749 156 mit quadratischen Wärmerohren bekanntgeworden, die zwischen Deckblechen einer Wabenstruktur eingebettet sind. Hierdurch werden aber die Anforderungen an die wärmemäßig und strukturmäßig optimierten Wärmerohr-Querschnitte nicht erfüllt.

Die Aufgabe der vorliegenden Erfindung ist es daher, für derartige Wärmerohre ein Wärmerohrprofil anzugeben, das in jedem Einzelfall die Verwendung als Bauelement von Sandwichplatten ermöglicht. Eine weitere Aufgabe wird darin gesehen, ein Wärmerohr anzugeben, dessen Wärmetransportfähigkeit möglichst groß ist.

Erfindungsgemäß ist ein Wärmerohrprofil insbesondere zur Integration in Honigwaben-Sandwich-Strukturen dadurch gekennzeichnet, daß das Wärmerohrprofil aus einem hinsichtlich der zu übertragenden Wärmeleistung optimierten Wärmerohr, vorzugsweise mit quadratischer Außenkontur, und einem sich an dieses in Richtung quer zur Sandwich-Platten-Ebene anschließenden und mit diesem wärmeleitend verbundenen Hohlprofil besteht, wobei die längere Seite der Wärmerohrprofil-Außenkontur der Sandwich-Platte entspricht.

Weitere vorteilhafte Ausbildungen des erfindungsgemäßen Wärmerohrprofils sind in den Ansprüchen 2 bis 4 angegeben.

Das Wärmerohr selbst, das insbesondere zusammen mit einem Wärmerohrprofil der vorstehend angegebenen Art zu verwenden ist, ist dadurch gekennzeichnet, daß es in axialer Richtung Zonen unterschiedlichen Kapillarendurchmessers, beispielsweise in Form unterschiedlicher Rillenbreite aufweist. Dabei ist das Rohr in axialer Richtung in drei Zonen unterteilt, in denen die an der Innenwand angebrachten Kapillaren unterschiedliche Durchmesser aufweisen, die jedoch in Längsrichtung des Wärmerohres miteinander in Verbindung stehen. Insbesondere im mittleren Teil, der sogenannten Transportzone, ist dabei eine Rillenbreite vorgesehen, die an sich nicht mehr die erforderliche Kapillarwirkung aufweist, wofür jedoch in diesem Bereich die Rillen durch eine vorzugsweise perforierte Metallfolie abgedeckt sind.

Das Wärmerohrprofil nach der Erfindung weist den Vorteil auf, daß die durch den Betrieb von Instrumenten entstehende unerwünschte Wärme im Inneren eines Satelliten nicht nur durch die übliche Wirkung eines Wärmerohres vom Ort der Entstehung in axialer Richtung des Wärmerohres abgeführt wird, sondern zusätzlich auch durch Wärmeleitung über die gesamte Länge des Wärmerohres hin auf die äußere Abdekkung der Sandwichplatte übertragen wird, die diese Wärme dann in Form von Wärmestrahlung an den Raum abgibt. Dabei läßt sich sowohl das Wärmerohr selbst durch die in den Ansprüchen 4 bis 9 angegebenen Maßnahmen als auch die Wärmeabgabe durch Wärmeleitung durch geeignete Wahl der Wandstärke des mit dem Wärmerohr selbst verbundenen Hohlprofils optimieren.

In den Zeichnungen sind Beispiele für Wärmerohrprofile nach der Erfindung bzw. die Ausgestaltung eines Wärmerohres selbst dargestellt, und zwar zeigt

Fig. 1 einen Schnitt durch eine Sandwichplatte mit integriertem Wärmerohrprofil,

Fig. 2 eine Abwandlung des Wärmerohrprofils in der Sandwichplatte,

Fig. 3 schematisch ein erfindungsgemäßes Wärmerohr sowie die

Fig. 4a bis c die Ausgestaltung der Innenseite eines Wärmerohres nach der Erfindung.

In der Sandwichplatte 1 mit der inneren Deckplatte 2 und der äußeren Deckplatte 3 sowie der zwischen diesen Deckplatten befindlichen Wabenstruktur 4 ist das Wärmerohrprofil 5 als integrierter Bestandteil enthalten. Dieses Wärmerohrprofil 5 besteht aus dem eigentlichen Wärmerohr 6, das einen quadratischen Außenquerschnitt aufweist und dem mit dem Wärmerohr 6 verbundenen rechteckigen Hohlprofil 7, das das Wärmerohr 6 so weit ergänzt, daß die längere Seite des rechteckigen Wärmerohrprofilquerschnitts 5 der Dicke der Sandwichplatte 1 entspricht. Die Seitenwand 8 des Hohlprofils 7 ist hinsichtlich seiner Dicke so bemessen, daß die erforderliche Wärmeleitfähigkeit erreicht wird.

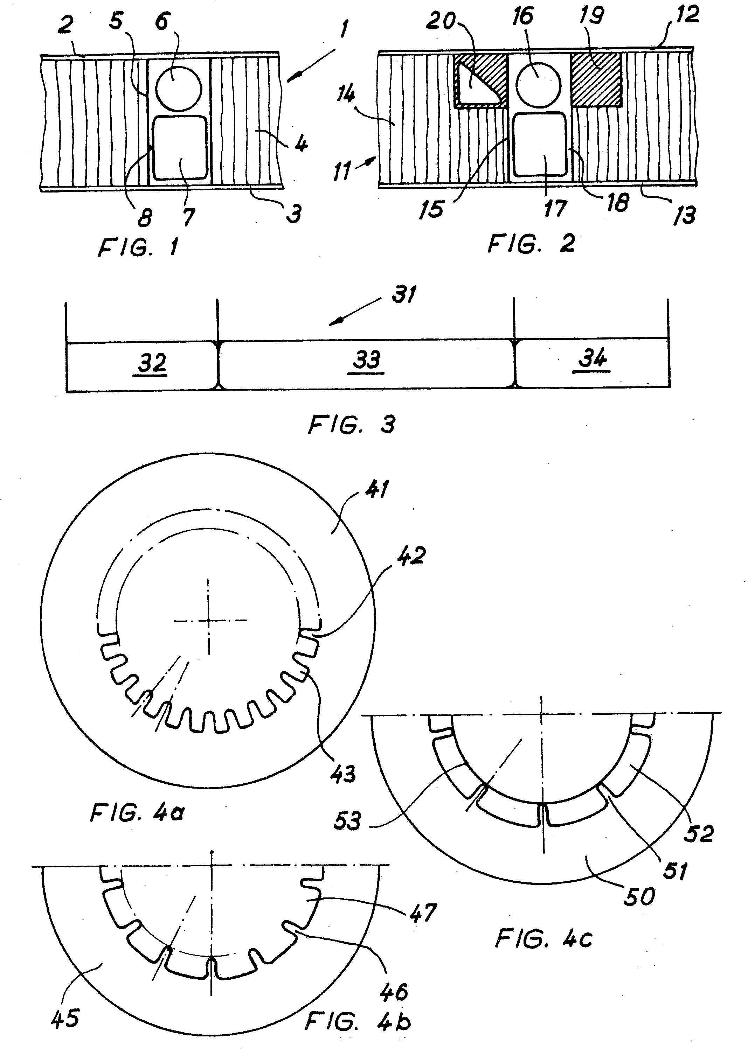

In der Fig. 2 ist eine Abwandlung des Wärmerohrprofils nach der Fig. 1 dargestellt, wobei die Änderung im wesentlichen darin besteht, daß seitlich des Wärmerohrs 16 Verstärkungsleisten 19 bzw. 20 angebracht sind, deren Aufgabe es ist, die von der nicht dargestellten Wärmequelle herkommende Wärme, deren Ausdehnung etwa der Gesamtbreite des Hohlprofils 17 entspricht, zusätzlich auch den Seiten des Wärmerohrs 16 zuzuführen und damit eine bessere Wärmeübertragung zu gewährleisten. Diese Verstärkungsleisten 19 bzw. 20 können zumindest teilweise als Hohlprofile ausgebildet sein. Maßgebend hierfür ist die Optimierung hinsichtlich der Wärmeleitung durch diese Verstärkungsleisten einerseits und ihrem Gewicht andererseits.

In der Fig. 3 ist ein Wärmerohr 31 schematisch dargestellt, das in eine Heizzone 32, eine Transportzone 33 und eine Kühlzone 34 unterteilt ist.

Dabei ist als Heizzone der Bereich des Wärmerohrs bezeichnet, dem die Wärme unmittelbar von der Wärmequelle her zugeführt wird und in dem die in dem Wärmerohr enthaltene Flüssigkeit verdampft wird. Andererseits ist die Kühlzone der Bereich des Wärmerohrs, in dem die in dem Dampf enthaltene latente Verdampfungswärme durch Kondensation des Dampfes an die Wärmerohrwand und von dieser nach außen abgegeben wird. Zwischen diesen beiden Zonen der Heizzone 32 und der Kühlzone 34 befindet sich die Transportzone 33, in derem Inneren einerseits die verdampfte Flüssigkeit von der Heizzone zur Kühlzone hin die latente Verdampfungswärme transportiert und an deren Innenwänden entlang die kondensierte Flüssigkeit von der Kühlzone 34 wieder in die Heizzone 32 zurücktransportiert wird. In den Fig. 4a bis 4c sind Schnitte durch diese drei Zonen 32, 33 und 34 dargestellt, und zwar zeigt die Fig. 4a einen Schnitt durch die Heizzone 32 mit der Rohrwand 41, den Stegen 42 und den von diesen Stegen und der Rohrwand gebildeten Rillen 43, wo die Flüssigkeit durch Zuführung von Wärme verdampft wird. Die Fig. 4b zeigt einen Schnitt durch die Kühlzone 34 mit der Rohrwand 45, den Stegen 46 und den Rillen 47, wo die verdampfte Flüssigkeit wieder kondensiert und damit die Verdampfungswärme abgibt. Prinzipiell könnte in diesem Bereich die Zahl der Stege und Rillen der Zahl der Stege und Rillen in der Heizungszone entsprechen, weil damit die Wärmeabgabe verbessert werden könnte. Allerdings ist eine Verringerung der Anzahl der Stege und Rillen zweckmäßig wegen der Kapillarkräfte, um die Druckverhältnisse in dem Wärmerohr zu verbessern.

In der Fig. 4c ist schließlich ein Schnitt durch die Transportzone 33 mit der Rohrwand 50, den Stegen 51, den Rillen 52 und der Abdeckfolie 53 dargestellt. In dieser Transportzone ist die Rillenbreite so groß, daß eine Abdeckung dieser Rillen durch eine Folie erforderlich wird, weil die Kapillarkräfte allein nicht ausreichen würden, um die Flüssigkeit in den Rillen zu halten und zur Heizzone 32 zurückzutransportieren. Die Abdeckfolie 53 ist zweckmäßig perforiert, um Kondensations- und Verdampfungsvorgänge während der Anfahrphase des Wärmerohres und bei Änderungen der Betriebstemperaturen zu erlauben. Die drei Zonen des Wärmerohres können getrennt voneinander hergestellt und anschließend miteinander verschweißt werden. Die perforierte Abdeckfolie wird dabei vor dem Verschweißen der drei Teile des Wärmerohres mit einem geeigneten Schweißverfahren auf die Stege aufgebracht. Es ist natürlich auch möglich, die Folie und Rillenstege für sich herzustellen und in ein glattes Rohr einzuschieben, wo sie dann in geeigneter Form mit diesem Rohr verschweißt werden.

**Patentansprüche**

1. Wärmerohrprofil (5, 15) zur Integration in eine Honigwaben-Sandwich-Platte (1, 11) mit parallel zur Sandwich-Platten-Ebene verlaufender Wärmerohrprofil-Achse, wobei das Wärmerohrprofil eine rechteckige Außenkontur aufweist, dadurch gekennzeichnet, daß das Wärmerohrprofil aus einem hinsichtlich der zu übertragenden Wärmeleistung optimierten Wärmerohr (6, 16), vorzugsweise mit quadratischer Außenkontur, und einem sich an dieses in Richtung quer zur Sandwich-Platten-Ebene anschließenden und mit diesem wärmeleitend verbundenen Hohlprofil (7, 17) besteht, wobei die längere Seite der Wärmerohrprofil-Außenkontur der Dicke der Sandwich-Platte entspricht.

2. Wärmerohrprofil nach Anspruch 1, dadurch gekennzeichnet, daß das Wärmerohrprofil (15) im Bereich der Wärmequellen, deren Wärme mittels des Wärmerohres abzuleiten ist, beiderseits des Wärmerohres (16) Verstärkungsleisten (19, 20) aufweist, deren Tiefe dem Durchmesser des hinsichtlich der abzuführenden Leistung optimierten Wärmerohrs (16) entspricht und deren Breite der Ausdehnung der Wärmequelle angepaßt ist.

3. Wärmerohrprofil nach Anspruch 2, dadurch gekennzeichnet, daß die Verstärkungsleisten (19, 20) zumindest teilweise als Hohlprofile ausgebildet sind.

4. Wärmerohrprofil nach einem der Ansprüche 1 bis 3, dadurch gekennzeichnet, daß der Querschnitt der Seitenwand (8, 18) des mit dem Wärmerohr (6, 16) verbundenen Hohlprofils (7, 17) hinsichtlich seiner Dicke und seiner Form bezüglich seiner Wärmeleitung und seines Gewichtes optimiert ist.

5. Wärmerohr mit einer in axialer Richtung verlaufende Rillen (43, 47, 52) aufweisenden Innenrohrwandung, insbesondere nach einem der Ansprüche 1 bis 4, dadurch gekennzeichnet, daß es in axialer Richtung Zonen (32, 33, 34) unterschiedlichen Kapillarendurchmessers — beispielsweise in Form unterschiedlicher Rillenbreiten — aufweist.

6. Wärmerohr nach Anspruch 5, dadurch gekennzeichnet, daß die Kapillaren in der Heizzone (32) den geringsten, in der Transportzone (33) zwischen Heiz- und Kühlzone (34) den größten Durchmesser bzw. Rillenbreite aufweisen.

7. Wärmerohr nach Anspruch 6, dadurch gekennzeichnet, daß die Rillenbreite (52) in der Transportzone (33) größer ist als zur Erhaltung der Kapillarwirkung zulässig und daß die Rillen (52) mit einer Folie (53) abgedeckt sind.

8. Wärmerohr nach Anspruch 7, dadurch gekennzeichnet, daß die Folie (53) eine perforierte Metallfolie ist, die auf die Stege (51) zwischen den Rillen (52) aufgeschweißt ist.

9. Wärmerohr nach Anspruch 8, dadurch gekennzeichnet, daß der Porenradius der perforierten Metallfolie (53) kleiner ist als die Rillenbreite der Heizzone (32).

**Claims**

1. A tube (5, 15) for carrying a heating medium, intended for incorporation in a honeycomb sandwich plate (1, 11) which has tubes with axes running parallel to the plane thereof, the tube having a rectangular outer contour, characterised in that the tube has a passage (6, 16) which is optimised with respect to the amount of heat to be transferred, preferably with a square external shape, and a hollow member (7, 17) adjacent thereto in a direction perpendicular to the plane of the plate and in heat conductive association therewith, the longer side of the outer contour of the tube corresponding to the thickness of the sandwich plate.

2. A tube according to claim 1, characterised in that the tube (15), in the region of the heat source from which the tube is to carry away heat, has on each side of the passage (16) strengthening fillets (19, 20) of which the depth corresponds to the diameter of the passage (16) optimised with respect to the amount of heat to be carried away, and of which the width is matched to the extent of the heat source.

3. A tube according to claim 2, characterised in that the strengthening fillets (19, 20) are at least in part in the form of hollow members.

4. A tube according to one of claims 1 to 3, characterised in that the crosssection of the side wall (8, 18) of the hollow member (7, 17) associated with the passage (6, 16) is optimised in respect of its heat conductivity and mass in thickness and shape.

5. A tube with an inner tube wall which has axially running grooves (43, 47, 52), in particular according to one of claims 1 to 4, characterised in that there are in the axial direction zones (32, 33, 34) of differing capillary diameters — for example in the form of different groove widths.

6. A tube according to claim 5, characterised in that the capillaries in the heating zone (32) have the smallest diameter or groove width, and in the transport zone (33) between the heating and cooling zone (34) have the largest diameter or groove width.

7. A tube according to claim 6, characterised in that the groove width (52) in the transport zone (33) is larger than is permissable to maintain capillary operation and that the grooves (52) are covered by a foil (53).

8. A tube according to claim 7, characterised in that the foil (53) is a perforated metal foil, which is soldered to the ribs (51) between the grooves (52).

9. A tube according to claim 8, characterised in that the radius of the perforations of the metal foil (53) is smaller than the groove width of the heating zone (32).

**Revendications**

1. Profilé tubulaire chauffant, à insérer dans une plaque sandwich de miel en rayons (1—11) avec l'axe du profilé tubulaire chauffant s'étendant dans le plan des plaques sandwich, de profilé chauffant présentant un contour extérieur rectangulaire, profilé caractérisé en ce qu'il est constitué par un tube chauffant (6, 16) de qualité optimale du point de vue puissance thermique transmise, de préférence avec un contour extérieur carré, et par un profilé creux (7, 17) raccordé au tube chauffant en direction transversale au plan des plaques sandwich et relié à ce tube à conduction de chaleur, le côté le plus long du contour extérieur du profilé tubulaire chauffant correspondant à l'épaisseur de la plaque sandwich.

2. Profilé tubulaire chauffant suivant la revendication 1, caractérisé en ce que ce profilé (15) présente, dans la zone de la source de chaleur, dont la chaleur est dérivée par ce profilé, de chaque côté du tuyau (16), des liteaux de renforcement (19, 20) dont l'épaisseur correspond au diamètre du tuyau chauffant (16) de caractère optimal du point de vue de la chaleur à évacuer, et dont la largeur est adaptée à l'extension de la source de chaleur.

3. Profilé tubulaire chauffant suivant la revendication 2, caractérisé en ce que les liteaux de renforcement (19, 20) sont constitués, au moins en partie, par des profilés creux.

4. Profilé tubulaire chauffant suivant l'une quelconque des revendications 1 à 3, caractérisé en ce que la section transversale de la paroi latérale (8, 18) du profilé creux (7, 17) relié au tuyau chauffant (6, 16) est de qualité optimale, du point de vue de son épaisseur et de sa forme, par rapport à son pouvoir de transmission de chaleur et à son poids.

5. Profilé tubulaire chauffant avec une paroi tubulaire intérieure pourvue de rainures (43, 47, 52) s'étendant en direction axiale, notamment suivant l'une des revendications 1 à 4, caractérisé en ce qu'il présente, en direction axiale, des zones (32, 33, 34) ayant des diamètres capillaires différents, par exemple sous la forme de largeurs de rainures différentes.

6. Profilé tubulaire chauffant, caractérisé en ce que les capillaires présentent, dans la zone de chauffage (32), le plus faible diamètre, c'est-à-dire de largeur de rainures et, dans la zone de transport (33), entre zone de chauffage et zone de refroidissement (34), le diamètre le plus grand.

7. Profilé chauffant suivant la revendication 6, caractérisé en ce que la largeur des rainures (52), dans la zone de transport, est supérieure à la largeur admissible pour maintenir l'effet de capillarité, et les rainures (52) sont recouvertes par une feuille (53).

8. Profilé chauffant suivant la revendication 7, caractérisé en ce que la feuille (53) est une feuille de métal perforée qui est soudée par fusion sur la surface restante entre les rainures.

9. Profilé chauffant suivant la revendication 8, caractérisé en ce que le rayon des trous de la feuille de métal perforée (53) est inférieur à la largeur de rainures dans la zone de chauffage (32).

FIG. 1

FIG. 2

FIG. 3

FIG. 4a

FIG. 4b

FIG. 4c